# FASCICULE DE BREVET EUROPEEN

(11) **EP 2 353 901 B1**
(45) Date de publication et mention de la délivrance du brevet: **25.07.2012**
(21) Numéro de dépôt: 10305994.5
(22) Date de dépôt: 17.09.2010
(51) Int. Cl.: B60H 3/00

(54) **Système de chauffage/climatisation pour un véhicule automobile et procède de contrôle associe**
Heizungs-/Klimaanlage für ein Kraftfahrzeug und entsprechendes Regelungsverfahren
Vehicle heating/cooling system and corresponding control method

(30) Priorité: 21.01.2010 FR 1050402
(43) Date de publication de la demande: 10.08.2011
(73) Titulaire: Renault S.A.S., 92100 Boulogne-Billancourt (FR)
(72) Inventeur: Makarov, Maxime, 78220, VIROFLAY (FR)

(56) Documents cités:
- EP-A1- 2 025 351
- FR-A1- 2 859 666
- FR-A1- 2 917 671
- US-A- 4 244 712

## Description

### DOMAINE DE L'INVENTION

L'invention concerne un système de chauffage/climatisation pour un véhicule automobile et le procédé de contrôle associé.

### TECHNIQUE ANTÉRIEURE

Un système de chauffage/climatisation pour un véhicule automobile permet de gérer l'air qui entre dans l'habitacle d'un véhicule depuis l'extérieur, et en particulier il permet de contrôler la température de l'air introduit dans l'habitacle. La qualité de cet air est une préoccupation importante des utilisateurs. C'est pourquoi les constructeurs proposent des dispositifs complémentaires pour améliorer cette qualité.

On a proposé par exemple des ioniseurs d'air. Un ioniseur est placé dans le système de chauffage/climatisation à proximité de la sortie d'air vers l'habitacle afin de diffuser des ions à l'intérieur de l'habitacle. Le document US2009/042502 montre par exemple un tel système. Un générateur de plasma est placé dans un conduit du système de chauffage/climatisation pour générer et diffuseur des ions négatifs. Des électrodes sont connectées à un circuit d'alimentation électrique qui fournit des impulsions électriques à haute tension. En particulier un générateur de courant alternatif à haute tension est prévu.

On a proposé également des ozoneurs permettant de stériliser l'intérieur du système de chauffage/climatisation. Le document FR 2 917 671 montre un exemple d'ozoneur placé au bas d'un évaporateur de climatiseur. Dans un mode d'assainissement, de l'air est aspiré de l'intérieur du véhicule et est expulsé à l'extérieur en passant par l'évaporateur. L'ozoneur fonctionne alors en générant de l'ozone en amont de l'évaporateur, lequel ozone permet de désinfecter le conduit et l'évaporateur. L'ozoneur comporte un générateur de plasma alimenté en haute tension par un circuit d'alimentation qui délivre des tensions comprises typiquement entre 5 et 10 kV, sous forme de signaux unipolaires ou bipolaires, impulsionnels ou sinusoïdaux.

L'amélioration de la qualité de l'air passe aussi par la filtration de celui-ci avant son introduction dans l'habitacle. Parmi les filtres, on a proposé des filtres électrostatiques qui commencent par charger les particules en suspension dans l'air avec des charges électriques, puis à capter ces particules par attraction de ces charges. Le document FR 2 859 666 montre par exemple un système de chauffage/climatisation comportant un filtre électrostatique. Le filtre comporte une partie ionisante formée par un générateur de plasma au travers duquel l'air extérieur passe. Puis l'air passe à travers un média filtrant qui retient les particules. Le générateur de plasma est alimenté en haute tension, par exemple entre 2 et 8 kV.

Le même document décrit également un régénérateur de catalyseur à effet adsorbant. Un tel catalyseur est réalisé par exemple par un filtre à charbon actif qui capte certaines molécules contenues dans l'air. Le régénérateur, placé en amont du filtre, permet de purger le filtre des molécules retenues. Il est alimenté en haute tension, comprise par exemple entre 5 et 15 kV.

Tous ces équipements sont complémentaires pour augmenter la qualité de l'air. Cependant, leur installation dans le système de chauffage/climatisation entraîne un coût important, dû en particulier à l'électronique nécessaire pour générer la haute tension.

Le document EP 2 025 351, qui est considéré comme l'art antérieur le plus proche, divulgue un système de chauffage/climatisation pour véhicule automobile comportant un boîtier, au moins deux dispositifs à générateur de plasma, lesdits dispositifs étant alimentés par des circuits d'alimentation électrique à haute tension.

### OBJECTIFS DE L'INVENTION

L'invention vise à fournir un système de chauffage/climatisation pour un véhicule automobile de nombreuses prestations de traitement de l'air mais à un coût raisonnable.

### EXPOSÉ DE L'INVENTION

Avec ces objectifs en vue, l'invention a pour objet un système de chauffage/climatisation pour véhicule automobile comportant un boîtier formant un conduit pour la circulation de l'air entre l'extérieur et l'intérieur du véhicule, et au moins deux dispositifs à générateur de plasma placé dans le conduit, et un circuit d'alimentation électrique à haute tension comportant une source électrique à haute tension unique, les générateurs à plasma de chaque dispositif étant reliés à la source par l'intermédiaire de commutateurs commandés par des moyens de commande, les moyens de commande étant prévus pour laisser en permanence au moins l'un des générateurs de plasma à l'arrêt.

Ainsi, grâce à l'invention, on prévoit un seul circuit d'alimentation à haute tension pour l'ensemble des dispositifs nécessitant de la haute tension. Cette mise en commun permet d'abaisser le coût de l'ensemble sans sacrifier les prestations de traitement de l'air.

Les dispositifs à générateur de plasma sont choisis par exemple parmi un ozoneur, un ioniseur, un filtre électrostatique ou un régénérateur de catalyseur.

De manière particulière, le commutateur est choisi parmi un relais électromécanique, un relais IGBT ou un relais MOS-FET. De tels commutateurs sont aptes à transmettre ou à couper un signal électrique à haute tension, et ils sont moins onéreux que des circuits d'alimentation à haute tension.

A titre d'exemple, la tension de la source est comprise entre 5 et 10 kV. Il est possible d'alimenter tout les dispositifs avec la même tension dans cette plage, sans risques pour le fonctionnement de ces dispositifs et sans compromettre leur efficacité.

Selon un réglage particulier, la fréquence de la source est comprise entre 1 est 10 kHz. Il est possible d'alimenter tout les dispositifs avec la même fréquence dans cette plage, sans risques pour le fonctionnement de ces dispositifs et sans compromettre leur efficacité.

L'invention a aussi pour objet un procédé de commande d'un système de chauffage/climatisation pour véhicule automobile comportant un boîtier formant un conduit pour la circulation de l'air entre l'extérieur et l'intérieur du véhicule, et au moins deux dispositifs à générateur de plasma placé dans le conduit, caractérisé en ce qu'on alimente les générateurs à plasma avec une même source électrique à haute tension, les générateurs à plasma de chaque dispositif étant reliés à la source par l'intermédiaire de commutateurs, et on laisse en permanence au moins un générateur de plasma à l'arrêt.

En laissant l'un des dispositifs au moins à l'arrêt, on peut prévoir le circuit d'alimentation de moindre taille que s'il fallait pouvoir alimenter l'ensemble des dispositifs. La taille du circuit d'alimentation est alors raisonnable. Il est possible de laisser l'un des dispositifs à l'arrêt car ils n'ont pas tous un fonctionnement continu et le fonctionnement de certains peut être décalé dans le temps sans conséquence sur leur efficacité.

De manière particulière, le générateur de plasma d'un filtre électrostatique est à l'arrêt si la vitesse du véhicule est inférieure à un seuil prédéterminé. On réserve ainsi l'utilisation du filtre électrostatique aux périodes pendant lesquelles le véhicule est occupé.

Selon une autre disposition, le générateur de plasma d'un régénérateur de catalyseur ou d'un ozoneur est à l'arrêt si le véhicule n'est pas à l'arrêt. L'opération de régénération ou de stérilisation risquant de générer des polluants (tels que l'ozone), on réserve leur utilisation à une période pendant laquelle il n'y a pas d'occupant dans le véhicule.

Selon une autre caractéristique, on pilote la tension délivrée par la source en fonction du ou des dispositifs alimentés. On peut ainsi optimiser le fonctionnement des dispositifs en fonction de leurs caractéristiques propres, en adaptant la tension d'alimentation.

### BRÈVE DESCRIPTION DES FIGURES

L'invention sera mieux comprise et d'autres particularités et avantages apparaîtront à la lecture de la description qui va suivre, la description faisant référence aux dessins annexés parmi lesquels:
- la figure 1 est une vue schématique d'un système de chauffage/climatisation selon l'invention ;
- la figure 2 est un schéma électrique du système de la figure 1.

### DESCRIPTION DETAILLÉE

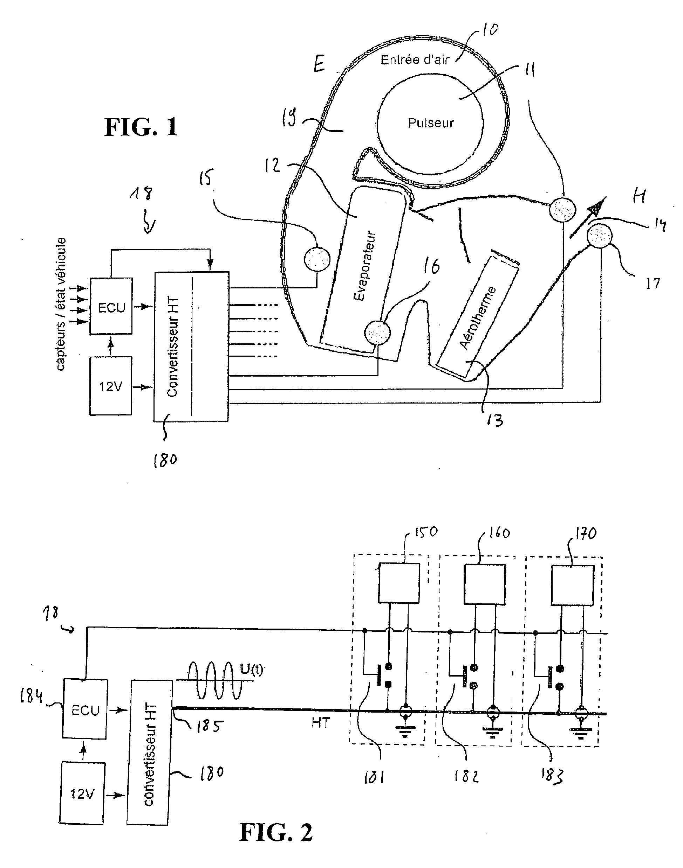

Un système de chauffage/climatisation selon l'invention, représenté sur la figure 1, comporte un boîtier formant un conduit 19 pour la circulation de l'air. Il comporte, dans le sens du flux d'air entrant depuis l'extérieur E, une entrée 10 d'air, un ventilateur 11, un évaporateur 12, un aérotherme 13 et une bouche de sortie 14 d'air. Le ventilateur 11 met l'air en circulation. L'évaporateur 12 est un élément du circuit de climatisation et permet de refroidir l'air qui le traverse. L'aérotherme 13 est en général alimenté par le circuit de refroidissement du moteur et permet de réchauffer l'air qui le traverse. La bouche de sortie 14 est placée dans l'habitacle H du véhicule équipé du système selon l'invention et permet de diffuser l'air traité par le système dans l'habitacle H.

Le schéma montre en outre la position d'un filtre électrostatique 15, d'un ozoneur 16 et d'un ioniseur 17. Ces dispositifs 15, 16, 17 comportent chacun un générateur de plasma 150, 160, 170 respectivement et qui ne sont pas détaillés ici car connu selon l'art antérieur.

Le système selon l'invention comporte en outre un circuit d'alimentation 18 électrique en haute tension. Ce circuit d'alimentation 18 comporte des moyens de commande 184 sous la forme d'un circuit à microprocesseur ECU, d'un convertisseur 180 de tension et de commutateurs 181, 182, 183. Ce circuit d'alimentation 18 est détaillé sur la figure 2.

Le convertisseur 180 comporte une source électrique 185 de haute tension qui est distribuée, par exemple par un câble coaxial, à trois commutateurs 181, 182, 183, lesquels commutent l'alimentation vers les trois générateurs de plasma 150, 160, 170. Le circuit d'alimentation 18 fournit une tension alternative sinusoïdale de 10 kV à 10 kHz. Il est commandé par les moyens de commande 184 qui pilotent le fonctionnement en tout-ou-rien. Il reçoit également une source d'énergie en basse tension continue par une batterie, par exemple en 12 V.

Les moyens de commande 184 pilotent également les commutateurs 181, 182, 183 pour déterminer quel générateur de plasma reçoit la tension fournie par le circuit d'alimentation 18.

Selon le procédé de commande de l'invention, l'ozoneur 16 n'est mis en fonctionnement que lorsque le véhicule est à l'arrêt. En fonction des informations reçues par d'autres capteurs dans le véhicule, le fonctionnement de l'ozoneur 16 peut être en outre interdit si la présence d'une personne dans le véhicule est détectée, même si le véhicule est à l'arrêt. L'ozoneur 16 est mis en fonctionnement avec un pilotage particulier du système, c'est-à-dire en inversant le flux d'air de l'habitacle H vers l'extérieur E, afin d'évacuer les éventuels polluants vers l'extérieur E.

Par contre, le filtre électrostatique 15 n'est mis en fonctionnement que si le véhicule roule au-dessus d'une vitesse prédéterminée. Avec la condition précédente, on garantit ainsi en permanence, que l'un au moins des dispositifs ne fonctionne pas en même temps que les autres.

L'ioniseur 17 peut être mis en fonction en permanence, ou à la demande de l'utilisateur du véhicule.

L'invention n'est pas limitée au mode de réalisation qui vient d'être décrit à titre d'exemple. D'autres dispositifs à générateur de plasma peuvent être utilisés. Le convertisseur peut être piloté de manière à fournir une tension ou une fréquence spécifique à chaque dispositif.

## Revendications

1. Système de chauffage/climatisation pour véhicule automobile comportant un boîtier formant un conduit (19) pour la circulation de l'air entre l'extérieur et l'intérieur du véhicule, au moins deux dispositifs (15, 16, 17) à générateur de plasma placé dans le conduit, et un circuit d'alimentation (18) électrique à haute tension comportant une source électrique (185) à haute tension unique, **caractérisé en ce que** les générateurs à plasma (150, 160, 170) de chaque dispositif (15, 16, 17) sont reliés à la source électrique (185) par l'intermédiaire de commutateurs (181, 182, 183) commandés par des moyens de commande (184), les moyens de commande étant prévus pour laisser en permanence au moins l'un des générateurs de plasma (150, 160, 170) à l'arrêt.

2. Système selon la revendication 1, dans lequel les dispositifs à générateur de plasma sont choisis parmi un ozoneur (16), un ioniseur (17), un filtre électrostatique (15) ou un régénérateur de catalyseur.

3. Système selon la revendication 1, dans lequel le commutateur (181, 182, 183) est choisi parmi un relais électromécanique, un relais IGBT ou un relais MOS-FET.

4. Système selon la revendication 1, dans lequel la tension de la source électrique (185) est comprise entre 5 et 10 kV.

5. Système selon la revendication 1, dans lequel la fréquence de la source électrique (185) est comprise entre 1 et 10 kHz.

6. Procédé de commande d'un système de chauffage/climatisation pour véhicule automobile comportant un boîtier formant un conduit pour la circulation de l'air entre l'extérieur et l'intérieur du véhicule, et au moins deux dispositifs (15, 16, 17) à générateur de plasma placé dans le conduit, **caractérisé en ce qu'**on alimente les générateurs à plasma avec une même source électrique (185) à haute tension, les générateurs de plasma (150, 160, 170) de chaque dispositif étant reliés à la source par l'intermédiaire de commutateurs (181, 182, 183), et on laisse en permanence au moins l'un des générateurs de plasma (150, 160, 170) à l'arrêt.

7. Procédé de commande selon la revendication 6, dans lequel le générateur de plasma (150) d'un filtre électrostatique (15) est à l'arrêt si la vitesse du véhicule est inférieure à un seuil prédéterminé.

8. Procédé de commande selon la revendication 6, dans lequel le générateur de plasma d'un régénérateur de catalyseur est à l'arrêt si le véhicule n'est pas à l'arrêt.

9. Procédé de commande selon la revendication 6, dans lequel le générateur de plasma (160) d'un ozoneur (16) est à l'arrêt si le véhicule n'est pas à l'arrêt.

10. Procédé de commande selon la revendication 6, dans lequel on pilote la tension délivrée par la source électrique (185) en fonction du ou des dispositifs (15, 16, 17) alimentés.

## Claims

1. Heating/air conditioning system for a motor vehicle comprising a box forming a duct (19) for the circulation of air between the outside and the inside of the vehicle, at least two plasma generator devices (15, 16, 17) placed in the duct, and a high-voltage electric power supply circuit (18) comprising a single high-voltage electrical source (185), **characterized in that** the plasma generators (150, 160, 170) of each device (15, 16, 17) are connected to the electrical source (185) by switches (181, 182, 183) controlled by control means (184), the control means being designed so that they always leave at least one of the plasma generators (150, 160, 170) switched off.

2. System according to Claim 1, in which the plasma generator devices are chosen from among an ozonizer (16), an ionizer (17), an electrostatic filter (15) or a catalyst regenerator.

3. System according to Claim 1, in which the switch (181, 182, 183) is chosen from an electromechanical relay, an IGBT relay or a MOSFET relay.

4. System according to Claim 1, in which the voltage of the electrical source (185) is between 5 and 10 kV.

5. System according to Claim 1, in which the frequency of the electrical source (185) is between 1 and 10 kHz.

6. Method for controlling a heating/air conditioning system for a motor vehicle comprising a box forming a duct for the circulation of air between the outside and the inside of the vehicle, and at least two plasma generator devices (15, 16, 17) placed in the duct, **characterized in that** the plasma generators are powered from the one same high-voltage electrical source (185), the plasma generators (150, 160, 170) of each device being connected to the source by switches (181, 182, 183) and at all times at least one of the plasma generators (150, 160, 170) is left switched off.

7. Control method according to Claim 6, in which the plasma generator (150) of an electrostatic filter (15) is left switched off if the speed of the vehicle is below a predetermined threshold.

8. Control method according to Claim 6, in which the plasma generator of a catalyst regenerator is left switched off if the vehicle is not stationary.

9. Control method according to Claim 6, in which the plasma generator (160) of an ozonizer (16) is left switched off if the vehicle is not stationary.

10. Control method according to Claim 6, in which the voltage delivered by the electrical source (185) is altered according to which device or devices (15, 16, 17) it is powering.

## Patentansprüche

1. Heizungs-/Klimaanlage für ein Kraftfahrzeug, die ein Gehäuse, das einen Kanal (19) für die Luftzirkulation zwischen der Außenumgebung und dem Inneren des Fahrzeugs formt, mindestens zwei Vorrichtungen (15, 16, 17) mit Plasmagenerator, der im Kanal angeordnet ist, und eine Hochspannungsstromversorgungsschaltung (18) aufweist, die eine einzige Hochspannungsstromquelle (185) aufweist, **dadurch gekennzeichnet, dass** die Plasmageneratoren (150, 160, 170) jeder Vorrichtung (15, 16, 17) mit der Stromquelle (185) über Schalter (181, 182, 183) verbunden sind, die von Steuereinrichtungen (184) gesteuert werden, wobei die Steuereinrichtungen vorgesehen sind, um dauerhaft mindestens einen der Plasmageneratoren (150, 160, 170) ausgeschaltet zu lassen.

2. System nach Anspruch 1, wobei die Vorrichtungen mit Plasmagenerator aus einem Ozonisator (16), einem Ionisator (17), einem elektrostatischen Filter (15) oder einem Katalysator-Regenerator ausgewählt werden.

3. System nach Anspruch 1, wobei der Schalter (181, 182, 183) aus einem elektromechanischen Relais, einem IGBT-Relais oder einem MOS-FET-Relais ausgewählt wird.

4. System nach Anspruch 1, wobei die Spannung der Stromquelle (185) zwischen 5 und 10 kV liegt.

5. System nach Anspruch 1, wobei die Frequenz der Stromquelle (185) zwischen 1 und 10 kHz liegt.

6. Verfahren zur Steuerung einer Heizungs-/Klimaanlage für ein Kraftfahrzeug, die ein Gehäuse, das einen Kanal für die Luftzirkulation zwischen der Außenumgebung und dem Inneren des Fahrzeugs formt, und mindestens zwei Vorrichtungen (15, 16, 17) mit Plasmagenerator aufweist, der im Kanal angeordnet ist, **dadurch gekennzeichnet, dass** die Plasmageneratoren von der gleichen Hochspannungsstromquelle (185) gespeist werden, wobei die Plasmageneratoren (150, 160, 170) jeder Vorrichtung über Schalter (181, 182, 183) mit der Quelle verbunden sind, und mindestens einer der Plasmageneratoren (150, 160, 170) dauerhaft ausgeschaltet gelassen wird.

7. Steuerverfahren nach Anspruch 6, wobei der Plasmagenerator (150) eines elektrostatischen Filters (15) ausgeschaltet ist, wenn die Geschwindigkeit des Fahrzeugs unter einer vorbestimmten Schwelle liegt.

8. Steuerverfahren nach Anspruch 6, wobei der Plasmagenerator eines Katalysator-Regenerators ausgeschaltet ist, wenn das Fahrzeug nicht angehalten ist.

9. Steuerverfahren nach Anspruch 6, wobei der Plasmagenerator (160) eines Ozonisators (16) ausgeschaltet ist, wenn das Fahrzeug nicht angehalten ist.

10. Steuerverfahren nach Anspruch 6, wobei die von der Stromquelle (185) gelieferte Spannung abhängig von der oder den gespeisten Vorrichtung (en) (15, 16, 17) geliefert wird.
